# EUROPÄISCHE PATENTSCHRIFT

(11) **EP 3 123 833 B1**
(45) Veröffentlichungstag und Bekanntmachung des Hinweises auf die Patenterteilung: **23.09.2020**
(21) Anmeldenummer: 15713391.9
(22) Anmeldetag: 04.03.2015
(51) Int. Cl.: H05B 47/10

(54) **GESTEUERTE LEUCHTENVORRICHTUNG**
CONTROLLED LAMP DEVICE
DISPOSITIF D'ÉCLAIRAGE COMMANDÉ

(30) Priorität: 26.03.2014 DE 102014104174
(43) Veröffentlichungstag der Anmeldung: 01.02.2017
(73) Patentinhaber: Steinel GmbH, 33442 Herzebrock (DE)
(72) Erfinder: MÖLLER, Thomas, 32049 Herford (DE)
(74) Vertreter: Müller Hoffmann & Partner
(86) Internationale Anmeldenummer: PCT/EP2015/054495
(87) Internationale Veröffentlichungsnummer: WO 2015/144405

(56) Entgegenhaltungen:
- WO-A1-2010/146446
- DE-B3- 10 251 133
- GB-A- 2 423 378
- US-A1- 2009 195 166
- US-A1- 2009 195 166

## Beschreibung

Die vorliegende Erfindung betrifft eine gesteuerte Leuchtenvorrichtung mit einem Leuchtengehäuse mit einer Lichtaustrittsöffnung, einer Sensoreinheit zum Erfassen eines berührungslosen manuellen Eingriffs einer Bedienperson der Leuchtenvorrichtung in einem Eingriffsbereich und einer Auswerte- und Steuereinrichtung zum Auswerten des von der Sensoreinheit erfassten Eingriffs der Bedienperson und zum Beeinflussen eines Steuerparameters für den Betrieb der Leuchtenvorrichtung in Abhängigkeit von einem Ergebnis des Auswertens.

Üblicherweise werden Leuchtenvorrichtungen, insbesondere Schreibtischleuchten und Tischleuchten, über von einer Bedienperson manuell zu betätigende Schalter ein- oder ausgeschaltet. Diese manuelle Betätigung eines Schalters stellt nicht nur ein grundsätzliches hygienisches Problem sondern auch ein Gefahrenpotential dar. Übliche Leuchtenvorrichtungen erzeugen eine hohe Verlustleistung in Form von Wärme und heizen sich an manchen Flächen derart auf, dass eine Bedienperson, die neben den zu betätigenden Schalter und auf eine der heißen Flächen greift, sich möglicherweise Verbrennungen zuziehen kann. Bei Leuchten mit von einer Bedienperson anfassbaren Metallteilen droht außerdem die Gefahr, dass die Bedienperson im Fall eines Defektes der Leuchtenvorrichtung einen elektrischen Schlag erleidet. Hinzu kommt, dass die mechanischen Komponenten eines manuell von einer Bedienperson zu betätigenden Schalters fehleranfällig sind und mechanischen Alterungserscheinungen unterliegen.

Zur Überwindung dieser Probleme sind aus dem Stand der Technik verschiedene Ansätze zur berührungslosen De-/Aktivierung einer Leuchtenvorrichtung bekannt. Bei Passivinfrarotdetektor-gesteuerten Leuchtenvorrichtungen wird die Wärmeabstrahlung eines sich in einem Erfassungsbereich des Passivinfrarotdetektors bewegenden Objektes genutzt. Über einen Differenzverstärker wird eine zeitliche Bewegung eines wärmeabstrahlenden Objektes detektiert.

Als weitere Möglichkeiten bietet sich beispielsweise eine Hochfrequenz-Dopplerradar-basierte Lösung an, die eine durch eine Bewegung eines Detektionsobjektes bewirkte Frequenzverschiebung eines zur Detektion ausgesendeten Frequenzstrahls erfasst.

Die im Stand der Technik oben aufgeführten, berührungsfrei gesteuerten Leuchtenvorrichtungen sind alle mit Problemen behaftet. Die Passivinfrarotdetektion leidet an einer großen Abhängigkeit der Detektionsseigenschaften von der Bewegungsrichtung eines wärmeabstrahlenden Objektes relativ zur Erfassungsrichtung des Sensors. Während sich Temperaturveränderungen bedingt durch sich lateral zu dem Passivinfrarotsensor bewegende Objekte als durch eine Linsenstruktur auf zwei Wärmesensoren gestreute Wärmestrahlungen gut erfassen lassen, können Bewegungen eines wärmeabstrahlenden Objektes, das sich direkt auf den Sensor zubewegt, nur sehr schwer erfasst werden. Außerdem ist die Genauigkeit einer Passivinfrarotdetektion stark von der räumlichen Größe des wärmeabstrahlenden Objektes und dessen Temperatur relativ zur Umgebungstemperatur abhängig. Die Justierung einer Passivinfrarotdetektion kann in der Regel nur über die Einstellung einer Empfindlichkeitsschwelle erfolgen. Bei der Hochfrequenz-Dopplerradar-basierten Lösung muss sich das zu detektierende Objekt mit einer Mindestgeschwindigkeit bewegen. Folglich kann eine langsame Bewegung unterhalb dieser Mindestgeschwindigkeit mit der Hochfrequenz-Dopplerfrequenzradar-basierten Lösung prinzipiell nicht erfasst werden.

Die oben aufgeführten gattungsgemäßen Leuchtenvorrichtungen ermöglichen eine berührungslose und bewegungsinitiierte De-/Aktivierung einer jeweiligen Leuchtenvorrichtung. Diese bekannten gesteuerten Leuchtenvorrichtungen leiden aber unter den oben erwähnten Nachteilen, insbesondere der Richtungsabhängkeit der Detektionsempfindlichkeit, der Ungenauigkeit der Bewegungs- bzw. Gestendetektion und/oder der erforderlichen Mindestgeschwindigkeit der ausgeführten Bewegung.

Aus der US 2009/0195166 A1 ist auch bekannt, die Bewegung eines Objekts innerhalb des Erfassungsbereichs eines Sensors zu verschiedenen Zeiten zu detektieren und daraus eines Erfassungsdatensequenz abzuleiten. Eine Lampe kann dann basierend auf der Erfassungsdatensequenz gesteuert werden.

Die DE 102 5 133 B3 beschreibt eine Leuchte, deren Leuchtrichtung basierend auf einem Bewegungssensorsignal der Bewegungsrichtung eines Objekts nachgeführt wird.

Die WO 2010/146446 A1 beschreibt eine Lampe, deren Kopf den Bewegungen einer Hand folgen kann und deren Leuchteigenschaften mittels vorbestimmter Gesten gesteuert werden können.

Die GB 2 423 378 A beschreibt eine Zahnarztlampe, deren Kopf den Bewegungen einer Hand folgen kann.

Die Aufgabe der vorliegenden Erfindung besteht in der Bereitstellung einer gesteuerten Leuchtenvorrichtung mit einer präziseren Steuerung der De-/Aktivierung bzw. einer verbesserten Erfassung der zur Steuerung verwendeten Bewegung(en) eines Objektes,
Die Aufgabe der vorliegenden Erfindung wird durch den Gegenstand des unabhängigen Patentanspruchs 1 gelöst. Zusätzliche Merkmale weiterer vorteilhafter Ausführungsformen ergeben sich aus den abhängigen Patentansprüchen.

Eine Leuchtenvorrichtung kann mit einem Leuchtengehäuse mit einer Lichtaustrittsöffnung, einer Sensoreinheit zum Erfassen eines berührungslosen, manuellen Eingriffs einer Bedienperson der Leuchtenvorrichtung in einen Eingriffsbereich bzw. Erfassungsbereich, einer Auswerte- und Steuereinrichtung zum Auswerten des von der Sensoreinheit erfassten Eingriffs der Bedienperson und zum Beeinflussen eines Steuerparameters für den Betrieb der Leuchtenvorrichtung in Abhängigkeit von einem Ergebnis des Auswertens versehen.
Die Sensoreinheit ist in und/oder an dem Leuchtengehäuse seitlich benachbart zu der Lichtaustrittsöffnung bereitgestellt. Ferner ist die Auswerte- und Steuereinrichtung so ausgebildet, dass sie den Steuerparameter, bevorzugt nur dann, beeinflusst, wenn das durch die Auswerte- und Steuereinrichtung erfolgte Auswerten ergibt, dass bei dem Eingriff der Bedienperson ein vorbestimmter Pfad in einem Eingriffsbereich gestenartig zurückgelegt worden ist.

Während bei _ Leuchtenvorrichtungen aus dem Stand der Technik nur die Bewegung an sich erfasst wird, also ob eine Bewegung oder, als Gegensatz dazu, ein stationärer Ruhezustand (Nicht-Bewegung) vorliegt, wertet die vorliegende Leuchtenvorrichtung eine Bewegung eines Objektes, das im Sinne einer gestenartigen Bewegung durch eine Hand bzw. eine Hand mit einem Armansatz dargestellt wird, mit Bezug zu einem vorbestimmten Pfad in einem Eingriffsbereich bzw. Erfassungsbereich aus. Der Begriff des vorbestimmten Pfades bezeichnet im Rahmen der vorliegenden Offenbarung dabei innerhalb des Eingriffsbereiches den Abschnitt bzw. die Abschnitte als vorbestimmten räumlichen Teilbereich des Eingriffbereiches, in dem die von der Bedienperson der Leuchtenvorrichtung ausgeführte Geste, d.h. ein Verschwenken bzw. Bewegen einer Hand in dem und/oder durch den Eingriffsbereich, liegen muss, damit die Auswerte- und Steuereinrichtung den Steuerparameter der Leuchtenvorrichtung beeinflusst. Der Begriff des vorbestimmten Pfades schließt auch eine Berücksichtigung des zeitlichen Aspektes der gestenartig durchgeführten Bewegung ein, indem eine zeitliche Bandbreite der durchgeführten Geste(n) oder die Länge eines Zeitintervalls von einem Beginn eines gestenartigen Eingriffs bis zu einem Ende des gestenartigen Eingriffs bei der Auswertung der gestenartigen Bewegung durch die erfindungsgemäße Leuchtenvorrichtung berücksichtigt wird/werden. Der Begriff des vorbestimmten Pfades hat auch eine Bedeutung im Sinne eines Pfades einer vorbestimmten Mindestlänge. Auch hier zeigt sich als Unterschied zu Leuchten aus dem Stand der Technik, dass nicht nur das alternative Vorliegen einer Bewegung öder einer Nicht-Bewegung erfasst wird, sondern die räumliche Erstreckung des von der Bedienperson in dem Eingriffsbereich, als Erfassungsbereich der Sensoreinheit, vorgenommenen Eingriffs berücksichtigt wird für die Beeinflussung eines Steuerparameters der Leuchtenvorrichtung.

Außerdem ist die Sensoreinheit in und/oder an dem Leuchtengehäuse seitlich benachbart zu der Lichtaustrittsöffnung bereitgestellt.

Dadurch kann ein von der Lichtaustrittsöffnung abgestrahltes Licht in einem Beleuchtungsbereich mit dem Eingriffbereich überlappen. Somit wird der an sich freie Beleuchtungsbereich sinnvoll als Erfassungsbereich bzw. Eingriffsbereich zur Gestensteuerung der Leuchtenvorrichtung genutzt. Zudem kann im lichtabstrahlenden Zustand der Leuchtenvorrichtung die Bedienperson den Eingriffsbereich sehr gut erkennen.

Zur weiteren Verdeutlichung, was im Folgenden unter dem Begriff eines vorbestimmten Pfades verstanden wird, der bei einem Eingriff der Bedienperson gestenartig in dem Eingriffsbereich zurückgelegt wird, werden im Folgenden einige Beispiele aufgeführt.

In einem Beispiel ist der vorbestimmte Pfad so definiert, dass dieser zurückgelegt worden ist, wenn der Eingriffsbereich in einer seiner Dimensionsrichtungen, z.B. horizontal, was insbesondere bei einer Tischleuchtenvorrichtung eine zweckmäßige Nutzung des zur Verfügung stehenden Raums ermöglicht, vollständig durch den berührungslosen manuellen Eingriff der Bedienperson durchquert wird. Dies entspricht dem Fall, dass eine Bedienperson beispielsweise der Tischleuchtenvorrichtung einen Eingriff in dem Eingriffsbereich so vornimmt, dass die zumindest eine Hand der Bedienperson eine wischartige Bewegung von links nach rechts oder umgekehrt vollzieht, im Sinne einer Geste eines von der Hand vorgenommenen Wegwischens oder Wegdrückens einer Sache von einer Seite zu einer anderen Seite. Falls eine von der Auswerte- und Steuereinrichtung vorgenommene Auswertung des von der Sensoreinheit erfassten gestenartigen Eingriffs in dem Eingriffsbereich ergibt, dass der vorbestimmte Pfad als eine derartige Wischgeste in dem Eingriffsbereich zurückgelegt wurde, beinflusst die Auswerte- und Steuereinrichtung den Steuerparameter für den Betrieb der Leuchtenvorrichtung derart, dass beispielsweise die Leuchtenvorrichtung von einem lichtabstrahlenden Betriebszustand in einen nicht-lichtabstrahlenden Betriebszustand versetzt wird, oder umgekehrt.

In einer Fortbildung dieses Beispiels berücksichtigt die Auswerte- und Steuereinrichtung bei dem Auswerten des gestenartigen Eingriffs außerdem dessen Richtung. Ergibt die von der Auswerte- und Steuereinrichtung vorgenommene Auswertung, dass der vorbestimmte Pfad als eine wie oben beschriebene Wischgeste von links nach rechts horizontal in dem Eingriffsbereich zurückgelegt wurde, so wird beispielsweise die Leuchtenvorrichtung in einen lichtabstrahlenden Betriebszustand versetzt, während sie für den Fall, dass der vorbestimmte Pfad als eine wie oben beschriebene Wischgeste von rechts nach links horizontal in dem Eingriffsbereich zurückgelegt wurde, die Leuchtenvorrichtung in einen nicht-lichtabstrahlenden Betriebszustand versetzt. Die Auswerte- und Steuereinrichtung kann also derart ausgebildet sein, dass sie nicht nur die Strecke des in dem Eingriffsbereich zurückgelegten Pfades sondern auch dessen Ausrichtung von einer Anfangsposition zu einer Endposition des zurückgelegten Pfades bei der Auswertung, ob der vorbestimmte Pfad zurückgelegt worden ist oder nicht, berücksichtigt und eine dem Ergebnis der Auswertung entsprechende Beeinflussung vornimmt. Ein weiteres Beispiel ist ferner derart ausgestaltet, dass die Auswerte- und Steuereinrichtung ausgebildet ist zum Auswerten des Eingriffs der Bedienperson hinsichtlich einer vorbestimmten Mehrzahl vorbestimmter Pfade, zum Erkennen des zu dem Eingriff der Bedienperson zugehörigen vorbestimmten Pfades aus der vorbestimmten Mehrzahl vorbestimmter Pfade, und zum Beeinflussen des Steuerparameters in Abhängigkeit von dem erkannten vorbestimmten Pfad.

In diesem Beispiel ist die Auswerte- Und Steuereinrichtung derart ausgestaltet, dass sie aus einer vorbestimmten Mehrzahl vorbestimmter Pfade einen bei einem manuellen Eingriff der Bedienperson in dem Eingriffsbereich zurückgelegten Pfad einem vorbestimmten Pfad aus der vorbestimmten Mehrzahl vorbestimmter Pfade zuordnen kann, also diesen erkennen kann. Für den Fall eines Erkennens eines vorbestimmten Pfades nimmt dann die Auswerte- und Steuereinrichtung eine Beeinflussung des Steuerparameters in Abhängigkeit von dem erkannten vorbestimmten Pfad vor. In einem Beispiel umfasst die vorbestimmte Mehrzahl vorbestimmter Pfade beispielsweise die oben beschriebene Wischgeste von links nach rechts horizontal in dem Eingriffsbereich als einen ersten vorbestimmten Pfad und ein gestenartiges Zurücklegen einer Strecke von unten nach oben, also vertikal, in dem Eingriffsbereich als einen zweiten vorbestimmten Pfad.

Wenn die Auswerte- und Steuereinrichtung gemäß dieses Beispiels einen gestenartigen Eingriff als die Wischgeste von links nach rechts auswertet und somit den Eingriff der Bedienperson dem ersten vorbestimmten Pfad aus der vorbestimmten Mehrzahl vorbestimmter Pfade zuordnet bzw. als diesen erkennt, beeinflusst die Auswerte- und Steuereinrichtung den Steuerparameter für den Betrieb der Leuchtenvorrichtung gemäß der für den erkannten ersten vorbestimmten Pfad vorgesehenen Beeinflussung, so dass die Leuchtenvorrichtung beispielsweise in einen lichtabstrahlenden Betriebszustand versetzt wird. Für den Fall eines vertikal gerichteten Eingriffs der Bedienperson in den Eingriffsbereich erkennt die Auswerte- und Steuereinrichtung hingegen, dass dieser Eingriff zu dem zweiten vorbestimmten Pfad zugehörig ist und beeinflusst sinngemäß den Steuerparameter auf eine andere Weise als bei dem Erkennen des ersten vorbestimmten Pfades. Beispielsweise führt die Auswerte- und Steuereinrichtung für den Fall, dass sie erkennt, dass der gestenartige Eingriff dem zweiten vorbestimmten Pfad zugehörig ist, eine Änderung der Helligkeit des von der Leuchtenvorrichtung abgestrahlten Lichtes durch.

Als weitere Fortbildung dieses Beispiels ist die der Auswerte- und Steuereinrichtung bekannte vorbestimmte Mehrzahl vorbestimmter Pfade so definiert, dass verschiedene vorbestimmte Pfade vorgesehen bzw. definiert sind für in der gleichen Richtung aber mit unterschiedlicher Streckenlänge zurückgelegte gestenartige Eingriffe. In diesem Fall kann die Auswerte- und Steuereinrichtung dann den Steuerparameter bezüglich einer selben Eigenschaft aber zu einem unterschiedlichen Ausmaß verändern, in Abhängigkeit von der bei dem gestenartigen Eingriff zurückgelegten Strecke, aus der Untermenge der vorbestimmten Pfade, die einen gestenartigen Eingriff in derselben Richtung aber mit unterschiedlicher Streckenlänge betreffen. So kann beispielsweise ein in den Eingriffsbereich auf einer kürzen Strecke vertikal durchgeführter Eingriff ein geringes Anheben der Heftigkeit des von der Leuchtenvorrichtung abgestrahlten Lichtes veranlassen, während ein über eine lange Strecke in den Eingriffsbereich vertikal durchgeführter Eingriff von der Auswerte- und Steuereinrichtung einem anderen vorbestimmten Pfad zugeordnet wird, so dass beispielsweise dann die Helligkeit des von der Leuchtenvorrichtung abgestrahlten Lichtes stark angehoben wird.

In einem weiteren Beispiel ist die Auswerte- und Steuereinrichtung ferner derart ausgebildet, dass sie den Steuerparameter dann beeinflusst, wenn das durch die Auswerte- und Steuereinrichtung erfolgte Auswerten ergibt, dass bei dem Eingriff der Bedienperson der vorbestimmte Pfad in dem Eingriffsbereich gestenartig innerhalb einer vorbestimmten Eingriffszeitdauer und/oder mit einer vorbestimmten Geschwindigkeitscharakteristik und/oder mit einer vorbestimmten Richtungscharakteristik zurückgelegt worden ist.

In diesem Beispiel ordnet die Auswerte- und Steuereinrichtung den gestenartigen Eingriff in dem Eingriffsbereich einem vorbestimmten Pfad nur dann zu, wenn dieser Eingriff innerhalb einer vorbestimmten Eingriffszeitdauer oder mit einer vorbestimmten Geschwindigkeitscharakteristik, beispielsweise mit einer Mindestgeschwindigkeit oder Maximalgeschwindigkeit, und/oder mit einer vorbestimmten Richtungscharakteristik, beispielsweise nur von unten nach oben, zurückgelegt worden ist. Anknüpfend an das zuvor erläuterte Beispiel erkennt beispielsweise eine Leuchtenvorrichtung gemäß dieses Beispiels einen als Wischgeste von links nach rechts über den gesamten Eingriffsbereich hinweg durchgeführten Eingriff nur als einem vorbestimmten Pfad zugehörig bzw. zugeordnet, wenn dieser Eingriff innerhalb einer diesem vorbestimmten Pfad zugeordneten vorbestimmten Eingriffszeitdauer, von beispielsweise zwei 2 Sekunden, erfolgt ist, und versetzt dann die Leuchtenvorrichtung in einen lichtabstrahlenden Zustand. Wurde dieser gestenartige Eingriff hingegen langsamer, also mit einer größeren Eingriffszeitdauer als der für den betrachteten bzw. ausgewerteten vorbestimmten Pfad vorbestimmten Eingriffszeitdauer durchgeführt, so kann in Kombination mit der zuvor beschriebenen Ausführungsform diese langsamer ausgeführte Geste einer anderen Beeinflussung des Steuerparameters, also einem anderen vorbestimmten Pfad, zugeordnet werden, so dass die Auswerte- und Steuereinrichtung beispielsweise einen Farbwert des von der Leuchtenvorrichtung abgestrahlten Lichtes verändert oder die Leuchtenvorrichtung in einen (später beschriebenen) Konfigurationsmodus versetzt.

In einem Beispiel, in dem die Auswerte- und Steuereinrichtung den gestenartigen Eingriff nur als ein Zurücklegen eines vorbestimmten Pfades auswertet, wenn dieser mit einer vorbestimmten Geschwindigkeitscharakteristik zurückgelegt worden ist, sind verschiedene Ausgestaltungen möglich. In einer einfachen Ausgestaltung wird äquivalent zu der vorbestimmten Eingriffszeitdauer eine vorbestimmte Mindestgeschwindigkeit oder Maximalgeschwindigkeit festgelegt, die eingehalten werden muss bzw. müssen, damit die Auswerte- und Steuereinrichtung einen gestenartigen Eingriff als Zurücklegen dieses vorbestimmten Pfades auswertet.

In einer Weiterentwicklung dieses Beispiels mit Berücksichtigung der vorbestimmten Geschwindigkeitscharakteristik können für einen vorbestimmten Pfad verschiedene Geschwindigkeitsintervalle für Teilabschnitte diese Pfades bzw. der zurückgelegten Strecke vorgesehen sein. So kann ein vorbestimmter Pfad mit einer vorbestimmten Geschwindigkeitscharakteristik beispielsweise dann vorliegen, wenn eine Strecke in einem ersten Abschnitt mit einer beliebigen Geschwindigkeit zurückgelegt worden ist, in einem zweiten Abschnitt mit einer sehr geringen oder sogar gar keinen Geschwindigkeit, also im Stillstand, zurückgelegt worden ist, und er in einem dritten Abschnitt mit einer Mindestgeschwindigkeit zurückgelegt worden ist.

In einer weiteren Ausgestaltung kann einem vorbestimmten Pfad eine Richtungscharakteristik so zugeordnet sein, dass die Auswerte- und Steuereinrichtung eine bei dem gestenartigen Eingriff der Bedienperson in dem Eingriffsbereich zurückgelegte Strecke nur dann als einen vorbestimmten Pfad erkennt bzw. diese zurückgelegte Strecke den vorbestimmten Pfad zuordnet, wenn die gestenartige Bewegung in eine gewisse Richtung oder über die zurückgelegte Strecke mit wechselnden vorbestimmten Richtungen durchgeführt wurde, beispielsweise in einem ersten Abschnitt von links nach rechts parallel zu einer Fläche der Lichtaustrittsöffnung und in einem zweiten Abschnitt von unten nach oben, senkrecht zur Lichtsaustrittsöffnung. Damit die Auswerte- und Steuereinrichtung erkennt, dass bei dem gestenartigen Eignriff ein vorbestimmter Pfad in dem Eingriffsbereich gestenartig zurückgelegt worden ist, kann diesem Pfad eine beliebig komplex festgelegte Kombination aus einer vorbestimmten Eingriffszeitdauer, einer vorbestimmten Geschwindigkeitscharakteristik und einer vorbestimmten Richtungscharakteristik zugeordnet sein.

Durch die Berücksichtigung der verschiedenen vorbestimmten Charakteristiken hinsichtlich der Auswertung des Vorliegens eines vorbestimmten Pfades kann nicht nur eine präzise berührungslose Steuerung der Leuchtenvorrichtung an sich, sondern auch eine multifunktionale Steuerung der Leuchtenvorrichtung realisiert werden.

In einem weiteren Beispiel ist die Auswerte- und Steuereinrichtung so ausgebildet, dass sie den Steuerparameter in Abhängigkeit von einer Richtung des bei dem Eingriff der Bedienperson zurückgelegten vorbestimmten Pfades relativ zu einer Referenzrichtung, die eine Senkrechte der Lichtaustrittsöffnung öder eine Senkrechte zu einer bodenseitigen Aufstellfläche der Leuchtenvorrichtung (beispielsweise realisiert durch ein in einem Verstellgelenk des Leuchtengehäuses aufgenommenes Potentiometer, über das ein Verstellwinkel der Lichtsaustritts-öffnung relativ zu der bodenseitigen Aufstellfläche der Leuchtenvorrichtung erfasst werden kann) ist, und/oder in, bevorzugt proportionaler, Abhängigkeit von einer Länge des bei dem Eingriff der Bedienperson zurückgelegten vörbestimmten Pfades beeinflusst.

Dies ermöglicht eine vereinfachte und präzisere gestengesteuerte Bedienung der Leuchtenvorrichtung, da die Bedienperson Achsen, entlang derer der gestenartige Eingriff für eine erwünschte Beeinflussung des Steuerparameters erfolgen sollte, besser anhand einer Neigung der Lichtsaustrittsfläche oder der Aufstellfläche erkennen kann.

In einem weiteren Beispiel ist die Auswerte- und Steuereinrichtung derart ausgebildet, dass sie den Steuerparameter beeinflusst, während die Bedienperson den vorbestimmten Pfad gestenartig in dem Eingriffsbereich zurücklegt.

Bei diesem Beispiel ergibt das durch die Auswerte- und Steuereinrichtung erfolgte Auswerten zunächst, dass bei dem Eingriff der Bedienperson der vorbestimmte Pfad oder ein vorbestimmter Pfad aus der vorbestimmten Mehrzahl vorbestimmter Pfade gestenartig in dem Eingriffsbereich zurückgelegt worden ist. Anschließend beeinflusst die Auswerte- und Steuereinrichtung den Steuerparameter in Abhängigkeit von dem erkannten vorbestimmten Pfad und führt die Beeinflussung des Steuerparameters gemäß dem fortgeführten Eingriff der Bedienperson in dem Eingriffsbereich nach.

Beispielsweise wertet die Auswerte- und Steuereinrichtung eine in dem Eingriffsbereich zurückgelegte Strecke zunächst als ein Zurücklegen eines vorbestimmten Pfades aus, dem eine Beeinflussung des Steuerparameters zum Erhöhen der Helligkeit des von der Leuchtenvorrichtung abgestrahlten Lichtes zugeordnet ist. Wenn die Bedienperson dann nach der Auswertung, dass bei dem bisher erfolgten Eingriff der Bedienperson ein bestimmter Pfad gestenartig zurückgelegt worden ist, den gestenartigen Eingriff fortsetzt, setzt demgemäß die Auswerte- und Steuereinrichtung die Beeinflussung des Steuerparameters solange fort, bis das Auswerten des von der Sensoreinheit erfassten Eingriffs der Bedienperson eine Beendigung des Eingriffs feststellt. Beispielsweise ergibt das von der Auswerte- und Steuereinrichtung erfolgte Auswerten, dass ein vorbestimmter Pfad zurückgelegt worden ist, der einer Beeinflussung des Steuerparameters derart entspricht, dass die Leuchtenvorrichtung in einen Betriebszustand versetzt wird, in dem sie rotes Licht (alternatives Beispiel: Licht mit einer gewissen Helligkeit) abstrahlt. Wenn die Bedienperson dann nach dem Beginn des Abstrahlen dieses Lichtes weiterhin einen gestenartigen Eingriff in dem Eingriffsbereich durchführt, wird der Farbwert (alternatives Beispiel: die Helligkeit) des von der Leuchtenvorrichtung abgestrahlten Lichtes solange verändert, bis die Bedienperson den gestenartigen Eingriff beendet.

Dieses Beispiel ermöglicht eine exakte Einstellung eines von der Bedienperson erwünschten Betriebsmodus der Leuchtenvorrichtung und realisiert ferner eine berührungslose Einstellung dieses Betriebsmodus, wie sie sonst nur von eine Berührung erfordernden bedienbaren Stell- bzw. Schiebereglern bekannt ist.

Gemäß einem weiteren Beispiel enthält die Auswerte- und Steuereinrichtung eine Aktivierungseinheit die ausgebildet ist zum Erkennen, ob während des Eingriffs in dem Eingriffsbereich ein vorbestimmter Aktivierungspfad zurückgelegt worden ist, und die, für den Fall, dass ein vorbestimmter Aktivierungspfad von der Aktivierungseinheit erkannt worden ist, der Auswerte- und Steuereinheit während eines Aktivierungsinterväits, das zeitlich vorbestimmt ist oder durch einen sich dem erkannten Aktivierungspfad anschließenden Eingriff der Bedienperson im Eingriffsbereich bestimmt ist, das Auswerten eines von der Sensoreinheit in dem Aktivierungsintervall erfassten berührungslosen manuellen Eingriffs in dem Eingriffsbereich und das Beeinflussen des Steuerparameters ermöglicht. Der vorbestimmte Aktivierungspfad entspricht quasi einem ersten vorbestimmten Pfad, dessen Zurücklegen in dem Eingriffsbereich das Erfassen einer anschließend in dem Eingriffsbereich zurückgelegten Strecke und das Auswerten dieser zweiten gestenartig zurückgelegten Strecke bezüglich eines zweiten vorbestimmten Pfades durch die Auswerte- und Steuereinheit ermöglicht.

Der vorbestimmte Aktivierungspfad entspricht dabei beispielsweise einem gestenartigen Eingriff in dem Eingriffsbereich in Form einer doppelt ausgeführten Wischgeste, also beispielsweise von links nach rechts und anschließend von rechts nach links, innerhalb einer kurzen Zeitdauer von beispielsweise einer Sekunde. Nachdem die Aktivierungseinheit erkannt hat, dass in dem Eingriffsbereich mit der doppelten Wischgeste der vorbestimmte Aktivierungspfad zurückgelegt worden ist, agiert die Aktivierungseinheit sinnvollerweise auch als Quittierungseinheit und quittiert demgemäß dem Bediener die durchgeführte Aktivierung, indem sie beispielsweise die Leuchtenvorrichtung in einen lichtabstrahlenden Zustand versetzt, wodurch die Bedienperson sehr leicht erkennen kann, dass die Leuchtenvorrichtung aktiviert ist und eine weitere Geste im Eingriffsbereich verarbeiten kann. Die Bedienperson kann dann entweder zeitlich vorbestimmt bzw. begrenzt oder für die Dauer eines von der Bedienperson im Eingriffsbereich vorgenommenen Eingriffs, einen gestengesteuerten Eingriff im Eingriffsbereich vornehmen, um die Leuchtenvorrichtung gestenartig zu steuern. Beispielsweise kann die Bedienperson während des Aktivierungsintervalls mittels eines gestenartigen Eingriffs, wie zuvor erläutert, die Helligkeit oder die Farbe des von der Leuchtenvorrichtung abgestrahlten Lichtes verändern bzw. beeinflussen.

Dieses Beispiel stellt eine besonders sichere und komfortable Steuerungs- und Einstellmöglichkeit der Leuchtenvorrichtung für die Bedienperson bereit. Dadurch, dass zuerst ein Aktivierungspfad gestenartig in dem Eingriffsbereich zurückgelegt bzw. eingegeben werden muss, kann der Steuerparameter nicht durch eine zufällige Bewegung der Bedienperson in der Nähe der Leuchtenvorrichtung verändert werden.

In einem weiteren Beispiel enthält die Auswerte- und Steuereinrichtung ferner eine Speichereinrichtung zum Speichern eines aktuellen Steuerparameters für einen zukünftigen Betrieb, insbesondere einen zukünftigen Einschaltvorgang, der Leuchtenvorrichtung in Reaktion auf ein empfangenes Speicherungssignal. Das Speicherungssignal signalisiert der Speicherungseinrichtung in der Auswerte- und Steuereinrichtung, dass ein aktueller Steuerparameter für einen zukünftigen Betrieb gespeichert werden soll. Dazu ist die Auswerte- und Steuereinrichtung ferner ausgebildet zum Erkennen eines Speicherungsbedarfs, indem sie erkennen bzw. auswerten kann, ob während des gestenartigen Eingriffs dieser gestenartige Eingriff für eine vorbestimmte Anhaltezeitdauer an einer Position im Eingriffsbereich angehalten wurde, und/oder ob in dem Eingriffsbereich ein vorbestimmter Speicherungspfad zurückgelegt worden ist, und ist ferner ausgebildet zum Erzeugen des Speicherungssignals für den Fall eines erkannten bzw. ausgewerteten Speicherungsbedarfs.

Gemäß diesem Beispiel kann eine Bedienperson durch einen gestenartigen Eingriff in dem Eingriffsbereich den Wert eines aktuellen Steuerparameters, beispielsweise die Helligkeit oder der Farbwert des aktuell von der Leuchtenvorrichtung abgestrahlten Lichtes, wunschgemäß in der Leuchtenvorrichtung speichern. Die Auswerte- und Steuereinrichtung erkennt den das Vorliegen eines Speicherungsbedarfs anhand davon, dass die Bedienperson einen gestenartigen Eingriff für eine vorbestimmte Anhaltezeitdauer, beispielsweise drei Sekunden, an einer Position im Eingriffsbereich anhält, also die Hand bzw. der Armabschnitt ruhig während dieser Arihaltezeitdauer im Eingriffsbereich verweilt, oder daran, dass in dem Eingriffsbereich ein vorbestimmter Speicherungspfad zurückgelegt worden ist, der bevorzugt durch ein rasches Wegziehen der Hand bzw. des Armabschnitts aus dem Eingriffsbereich definiert ist.

Alternativ oder optional kann die Auswerte- und Steuereinrichtung auch den Speicherbedarf erkennen, wenn während eines gestenartigen Eingriffs dieser zuerst für eine vorbestimmte Anhaltezeitdauer im Eingriffsbereich angehalten wird, und anschließend der zuvor erwähnte vorbestimmte Speicherungspfad von der Bedienperson im Eingriffsbereich zurückgelegt wird. Dem vorbestimmten Speicherungspfad ist dabei bevorzugt eine vorbestimmte Geschwindigkeitscharakteristik zugeordnet, so dass die Auswerte- und Steuereinrichtung die im Eingriffsbereich zurückgelegte Strecke nur als den vorbestimmten Speicherungsgrad auswertet bzw. erkennt, wenn die Bedienperson ihre Hand bzw. ihren Armabschnitt mit einer hohen Mindestgeschwindigkeit aus dem Eingriffsbereich entfernt.

Diese berührungslose Realisierung einer Initiierung einer Speicherung ist besonders vorteilhaft, weil sich die von der Bedienperson vorzunehmende Aktion zur Signalisierung des Speicherungsbedarfs sehr gut an eine von der Bedienperson im Eingriffsbereich durchgeführte gestenartige Einstellung der Helligkeit oder des Farbwertes des von der Leuchtenvorrichtung abgestrahlten, Lichtes anschließt.

Gemäß einem weiteren Beispiel enthält die Auswerte- und Steuereinrichtung ferner eine Lern- und Konfigurationseinheit, die ausgebildet ist zum Erfassen und Aufzeichnen, in einem von einem normalen Steuerungsmodus der Leuchtenvorrichtung verschiedenen Trainingsbetriebsmodus, von Referenzpositionen und/oder von vorbestimmten Pfaden, die ein Bediener in dem Eingriffsbereich festlegt bzw. zurücklegt, und zum Konfigurieren der Auswerte- und Steuereinrichtung gemäß den erfassten und aufgezeichneten Referenzpositionen und/oder den vorbestimmten Pfaden.

Dabei ist die Leuchtenvorrichtung derart ausgebildet, dass der Trainingsbetriebsmodus gestartet wird bei einer erstmaligen Inbetriebnahme der Leuchtenvorrichtung nach deren Auslieferung, nach Wiederherstellung der Stromversorgung für die Leuchtenvorrichtung nach deren Trennung von der Stromversorgung, oder indem die Bedienperson in dem Eingriffsbereich einen vorbestimmten Trainingspfad zurücklegt, der beispielsweise durch eine in dem Eingriffsbereich von der Bedienperson dreimal innerhalb kurzer Zeit, beispielsweise drei Sekunden, durchgeführten Wischgeste von links nach rechts und zurück von rechts nach links definiert ist. Während des Trainingsbetriebsmodus signalisiert die Leuchtenvorrichtung durch Abstrahlen von Licht, beispielsweise getaktet, mit variierender Helligkeit und/oder mit einem variierenden Farbwert, welchen Eingriff die Bedienperson in den Eingriffsbereich vornehmen soll.

Beispielsweise strahlt die Leuchtenvorrichtung mit einem schnellen Blinktakt Licht ab, um der Bedienperson zu signalisieren, dass diese ihre Hand an einer vorgegebenen Referenzposition, beispielsweise senkrecht unter der Lichtaustrittsöffnung, positionieren soll, oder signalisiert der Bedienperson, dass diese eine Wischgeste in dem Eingriffsbereich vollziehen soll, indem die Leuchtenvorrichtung kontinuierlich die Helligkeit des von ihr abgestrahlten Lichtes verändert.

Diese Realisierung einer Konfiguration der gesteuerten Leuchtenvorrichtung ermöglicht eine universelle Bedienbarkeit und Anpassung an ein weites Gebiet von Anwendungsszenarien.

Gemäß einem weiteren Beispiel beeinflusst der Steuerparameter für den Betrieb der Leuchtenvorrichtung mindestens einen Betriebszustand der Leuchtenvorrichtung, der ausgewählt ist aus der Gruppe von einer Leuchtmittelaktivierung, also ein Anschalten oder Ausschalten des von der Leuchtenvorrichtung abgestrahlten Lichtes, einer Lichtintensität, also eine Helligkeit bzw. Dimmstufe, des von der Leuchtenvorrichtung abgestrahlten Lichtes, und einem Farbwert des von der Leuchtenvorrichtung abgestrahlten Lichtes, und Kombinationen von diesem.

Gemäß diesem Beispiel kann die Leuchtenvorrichtung beispielsweise durch eine Wischgeste von links nach rechts angeschaltet werden und durch eine von rechts nach links im Eingriffsbereich durchgeführte Wischgeste ausgeschaltet werden. Die Lichtintensität kann im lichtabstrahlenden Zustand der Leuchtmittelvorrichtung durch eine von der Bedienperson im Eingriffsbereich vertikal, also von unten nach oben bzw. von oben nach unten, durchgeführte Geste erhöht bzw. verringert werden. Der Farbwert kann dann beispielsweise über eine gestenartige Bewegung in einer zu den beiden zuvor genannten Richtungen senkrechten Richtung entsprechend verändert werden.

Gemäß einem Beispiel Ausführungsform enthält die Sensoreinheit einen Sensor von einem Typ aus einer Gruppe von einem Passivinfrarotsensor, Bilderfassungssensor und Hochfrequenzradarsensor oder eine eindimensional oder zweidimensional angeordnete Kombination von Sensoren von einem gleichen Typ oder unterschiedlichen Typen aus der Gruppe, um den berührungslosen manuellen Eingriff der Bedienperson in den Eingriffsbereich zu erfassen. In einem Beispiel sind insbesondere mehrere Passivinfrarotsensoren entlang einer Geraden oder auf einer Fläche angeordnet.

Gemäß einem weiteren Beispiel weist das Leuchtengehäuse, der Leuchtenvorrichtung, die bevorzugt als Tischleuchte ausgebildet ist, bodenseitig und von der Lichtaustrittsöffnung beabstandet einen Sockel zum Aufstellen der Leuchtenvorrichtung auf einer Aufstellfläche auf, und der Eingriffsbereich erstreckt sich von einer Fläche der Lichtaustrittsöffnung bis zu der Aufstellfläche und überlappt bevorzugt mit dem Beleuchtungsbereich und/oder ist in diesem gelegen.

Besonders für eine Tischleuchtenvorrichtung kann der von dieser mit Licht bestrahlte Beleuchtungsbereich zweckgemäß als Eingriffsbereich für einen von der Bedienperson vorgenommenen gestenartigen Eingriff genutzt werden.

Die Funktionalitäten der Sensoreinheit und insbesondere der Auswerte- und Steuereinrichtung können teilweise oder vollständig mittels Software, Hardware oder einer Kombination von Software und Hardware realisiert sein.

Weitere vorteilhafte Beispiele ergeben sich aus der Kombination von mindestens zwei der zuvor oder im Nachfolgenden aufgeführten Beispiele , sofern eine derartige Kombination nicht offensichtlich widersinnig ist.

Im Folgenden werden Beispiele für die Erfindung anhand der beigefügten Figuren erläutert, in denen
- Fig. 1: eine Seitenansicht einer Leuchtenvorrichtung zeigt; und
- Fig. 2: eine Sensoreinheit der in Fig. 1 gezeigten Leuchtenvorrichtung und ihren zugehörigen Eingriffsbereich zeigt.

In diesen Figuren sind identische oder gleiche Elemente mit denselben Bezugszeichen versehen.

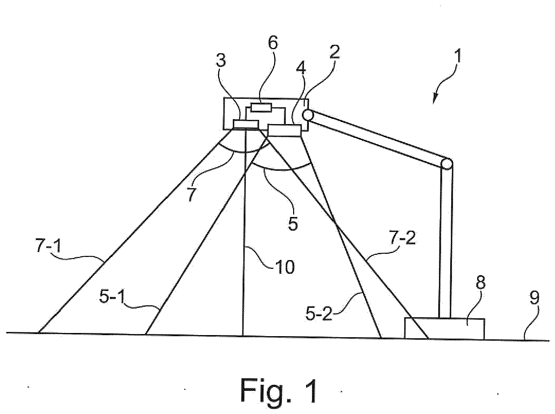

In Fig. 1 ist eine Leuchtenvorrichtung gezeigt. Die Leuchtenvorrichtung 1 ist als Tischleuchte gezeigt und weist ein Leuchtengehäuse 2 und einen Sockel 8 auf. Der Sockel 8 dient, wie in Fig. 1 dargestellt, zur Aufstellung der Leuchtenvorrichtung auf einer Aufstellfläche 9.

In dem Leuchtengehäuse 2 sind die Lichtaustrittsöffnung 3, die Sensoreinheit 4 und die Auswerte- und Steuereinrichtung 6 aufgenommen. Die Auswerte- und Steuereinrichtung 6 ist elektrisch mit der Sensoreinheit 4 Verbunden und wird von dieser mit Informationen für die Auswertung eines gestenartigen Eingriffs versorgt. Die Auswerte- und Steuereinrichtung 6 ist auch elektrisch mit dem Leuchtmittel (in Fig. 1 nicht explizit dargestellt, aber als in der Lichtaustrittsöffnung 3 enthalten angenommen) der Leuchtenvorrichtung 1 verbunden und beeinflusst dessen Ansteuerung bzw. Betriebsmodus.

Die Lichtaustrittsöffnung 3 ist in bzw. an dem Leuchtengehäuse 2 so angeordnet und ausgebildet, dass von dem in der Leuchtenvorrichtung 1 aufgenommenen Leuchtmittel durch die Lichtaustrittsöffnung 3 auf die Aufstellfläche 9 abstrahlbares Licht innerhalb eines Beleuchtungsbereichs 7 abstrahlbar ist, der durch in Fig. 1 gezeigte, gedachte Begrenzungslinien 7-1 und 7-2 aufgespannt ist, mit der Senkrechten der Lichtaustrittsöffnung 10 als Winkelhalbierende, und sich von der Lichtaustrittsöffnung 3 nach unten bis zu der Aufstellfläche 9 erstreckt.

Die Sensoreinheit 4 ist in bzw. an dem Leuchtengehäuse 2 seitlich benachbart zu der Lichtaustrittsöffnung 3 bereitgestellt und ist ausgebildet als Sensoreinheit zum Erfassen eines berührungslosen Eingriffs einer Bedienperson der Leuchtenvorrichtung 1 in dem Eingriffsbereich 5, der durch in Fig. 1 gezeigte, gedachte Begrenzungslinien 5-1 und 5-2 aufgespannt ist und sich von der Sensoreinheit 4 nach unten bis zu der Aufstellfläche 9 erstreckt. Der Eingriffsbereich bzw. Erfassungsbereich 5 überlappt räumlich mit dem Beleuchtungsbereich 7.

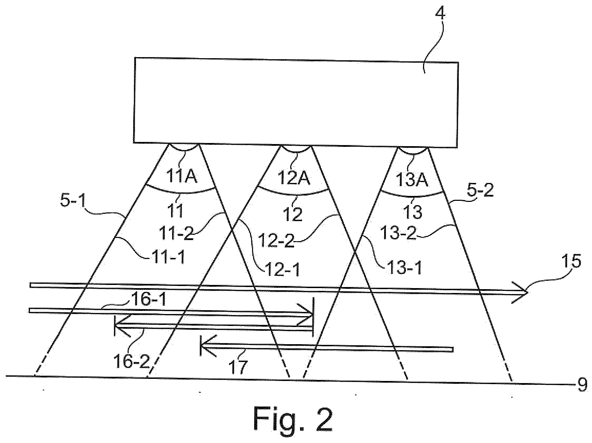

Fig. 2 zeigt eine Sensoreinheit 4, die in der in Fig. 1 gezeigten Leuchtenvorrichtung aufgenommen ist. Ferner zeigt Fig. 2 eine nicht maßstabsgetreue Ansicht des durch die gedachten Begrenzungslinien 5-1 und 5-2 aufgespannten und ferner durch die Aufstellfläche 9 begrenzten Eingriffsbereiches 5.

Die in Fig. 2 gezeigte Sensoreinheit 4 umfasst drei Passivinfrarotdetektions-Sensoren 11A, 12A und 13A mit ihren jeweiligen, nicht maßstabsgetreu dargestellten Erfassungsbereichen 11, 12 bzw. 13, die zusammen den durch die in Fig. 1 und Fig. 2 gezeigten, gedachten Begrenzungslinien 5-1 und 5-2 aufgespannten Eingriffsbereich 5 der Sensoreinheit 4 bilden. Die Sensoren 11A, 12A und 13A sind entlang einer Anordnungsachse angeordnet. Der Erfassungsbereich 11 des Passivinfrarotdetektions-Sensor 11A erstreckt sich innerhalb der in Fig. 2 gezeigten, gedachten Begrenzungslinien 11-1 und 11-2 von dem Passivinfrarotdetektions-Sensor 11A bis zu der Aufstellfläche 9. Die Erfassungsbereiche 12 und 13 der anderen beiden Passivinfrarotdetektions-Sensoren 12A und 13A erstrecken sich entsprechend innerhalb der in Fig. 2 gezeigten, gedachten Begrenzungslinien 12-1 und 12-2 bzw. 13-1 und 13-2 von dem jeweiligen Sensor 12A bzw. 13A bis zu der Aufstellfläche 9.

Die in Fig. 2 gezeigte Sensoreinheit 4 ist aufgrund der drei entlang der horizontalen Anordnungsachse angeordneten Sensoren 11A, 12A und 13A besonders gut zur Erfassung von gestenartigen Eingriffen bzw. Gesten der Bedienperson geeignet, die entlang einer Parallelen dieser Anordnungsachse ausgeführt werden.

Die in Fig. 2 gezeigten, sich horizontal erstreckenden Pfeile 15, 16-1, 16-2 und 17 sollen gestenartige Eingriffe einer Bedienperson, d.h. ein Verschwenken oder Bewegen einer Hand bzw. eines Armabschnitts, in dem Eingriffsbereich 5 der Sensoreinheit 4 verdeutlichen. Der sich in Fig. 2 von links nach rechts erstreckende Pfeil 15 repräsentiert einen gestenartigen Eingriff der Bedienperson, die ihre Hand von links nach rechts und somit parallel zu der Anordnungsachse der Sensoren bewegt. Anfangs befindet sich die gestenartig bewegte Hand außerhalb des Eingriffsbereichs 5 (und somit links der Begrenzungslinie 5-1 von Fig. 2), dann wird die Hand von links nach rechts bewegt und durchschreitet dabei den Eingriffsbereich 5 und somit auch alle Erfassungsbereiche 11A, 12A und 13A, bis die Handbewegung schließlich außerhalb des Eingriffsbereichs (und somit rechts der Begrenzungslinie 5-2 von Fig. 2) endet. Der Pfeil 15 stellt eine schnell ausgeführte Wischbewegung von links nach rechts durch den gesamten Eingriffsbereich 5 dar.

Bei dieser schnellen Wischbewegung einer Hand gemäß Pfeil 15 werden die einzelnen Erfassungsbereiche 11, 12 und 13 der Sensoren 11A, 12A und 13A zeitlich nacheinander und teilweise überlappend durchschritten, und dem entsprechend erfassen die Sensoren 11A, 12A und 13A ein Eintreten und ein Verlassen der bewegten Hand in die jeweiligen Erfassungsbereiche 11, 12 und 13 zu unterschiedlichen Eintritts- und Verlassenszeiten. Die Sensoreinheft 4 meldet diese erfassten Eintrittszeiten te_x und Verlassenszeiten tv__x (x steht dabei für den jeweiligen Sensor) an die Auswerte- und Steuereinheit 6, die anhand dieser gemeldeten Eintritts- und Verlassenszeiten die erfolgte gestenartige Bewegung der Hand auswerten kann. Bezogen auf das Beispiel von Pfeil 15 in Fig. 2 bestimmt die Auswerte- und Steuereinrichtung 6, dass die Bewegung kontinuierlich von links nach rechts erfolgte (wegen te_11A < te_12A < te_13A) und bewertet auf Grundlage der Differenz tv_13A-te_11A zwischen den Zeiten des Eintritts in den Eingriffbereichs 5 und dessen Verlassen die Geschwindkeit der erfolgten Handbewegung. Unterschreitet die Differenz tv_13A-te_11A (bzw. der Absolutbetrag davon) ein gewisses vorbestimmtes Ausmaß, bestimmt die Auswerte- und Steuereinheit 6 dann, dass bei dem gestenartigen Eingriff gemäß Pfeil 15 ein vorbestimmter Pfad zurückgelegt worden ist, nämlich dass eine schnelle, von links nach rechts ausgeführte Wischgeste vorliegt. Als Folge dieses Auswertungsergebnisses aktiviert dann die Auswerte- und Steuereinrichtung 6 das in der Leuchtenvorrichtung 1 aufgenommene Leuchtmittel, so dass die Leuchtenvorrichtung Licht abstrahlt. Die horizontal von links nach rechts durch den Eingriffsbereich 5 mit hoher Geschwindigkeit durchgeführte Wischgeste veranlasst also die Auswerte- und Steuereinrichtung 6 zum Aktivieren bzw. Einschalten des Leuchmittels der Leuchtenvorrichtung. Eine Deaktivierung bzw. ein Ausschalten des Leuchtmittels der Leuchtenvorrichtung erfolgt hingegen, wenn die Auswertung durch die Auswerte- und Steuereinrichtung 6 ergibt, dass eine schnelle Wischgeste von rechts nach links durch den Eingriffsbereich 5, im Detail nacheinander durch die Erfassungsbereiche 13A, 12A und 11A, vorliegt.

Die in der Auswerte- und Steuereinrichtung 6 festgelegte bzw. dieser zugängliche Information über die vorbestimmte Mehrzahl vorbestimmter Pfade sieht weitere Auswertemöglichkeiten für die getätigten gestenartigen Eingriffe bzw. vorbestimmte Pfade vor, die im folgenden anhand der weiteren, in Fig. 2 gezeigten Pfeile erläutern werden sollen.

Die Pfeile 16-1 und 16-2 in Fig. 2 repräsentieren eine langsam, zunächst von links nach rechts, anschließend von rechts nach links, durchgeführte Geste der Bedienperson in dem Eingriffsbereich 5. Die Auswertung von te_11A, te_12A ergibt demzufolge, dass eine mit langsamer Geschwindigkeit ausgeführte Geste von links nach rechts durchgeführt worden ist. Demgemäß hebt die Auswerte- und Steuereinrichtung 6 die Helligkeit des von der Leuchtenvorrichtung 1 abgestrahlten Lichtes an. Beim Übergang von dem Pfeil 16-1 zum Pfeil 16-2 wechselt die Bedienperson die Richtung der durchgeführten Geste, die nun von rechts nach links im Eingriffsbereich verläuft. Die Auswerte- und Steuereinrichtung 6 erkennt diesen Richtungswechsel daran, dass der Sensor 13A den gestenartigen Eingriff der Bedienperson auch nach Verstreichen einer gewissen Zeit nach Erfassen durch den Sensor 12A nicht erfassen kann, sondern vielmehr der Sensor 11A zusammen mit dem Sensor 12A den nach dem Richtungswechsel fortgesetzten gestenartigen Eingriff erfassen. Aufgrund dieser Auswertung verringert die Auswerte- und Steuereinrichtung 6 dann die Helligkeit des von der Leuchtenvorrichtung 1 abgestrahlten Lichtes.

Der durch den Pfeil 17 in Fig. 2 repräsentierte gestenartige Eingriff erfolgt wie der durch die Pfeile 16-1 und 16-2 dargestellte Eingriff mit langsamer Geschwindigkeit aber in umgekehrter Anfangsrichtung, nämlich von rechts nach links. Die Auswerte- und Steuereinrichtung 6 wertet dieses im Sinne einer Färbwechselgeste aus und verändert dem entsprechend den Farbwert des von der Leuchtenvorrichtung 1 abgestrahlten Lichtes, bis der mit langsamer Geschwindigkeit ausgeführte, gestenartige Eingriff endet.

Die aktuellen Werte des Steuerparameters, die wie oben geschildert durch die gestenartigen Bewegungen gemäß den Pfeilen 16-1, 16-2 und 17 in Fig. 2 mittels Beeinflussung durch die Auswerte- und Steuereinrichtung 6 eingestellt worden sind, können für spätere Einschaltvorgänge der Leuchtenvorrichtung 1 dauerhaft in einer Speichereinrichtung der Auswerte- und Steuereinrichtung 6 gespeichert werden, indem die Bedienperson im Eingriffsbereich im direkten Anschluss an eine der zuvor mit Bezug auf Pfeile 16-1, 16-2 oder 17 geschilderten, durchgeführten Bewegung mit langsamer Geschwindigkeit nun eine gestenartige Bewegung von links nach rechts oder umgekehrt mit hoher Geschwindigkeit ausführt, was die Auswerte- und Steuereinrichtung 6 als Zurücklegen des vorbestimmten Speicherungspfades mit einer vorbestimmten Speicherungsgeschwihdigkeitscharakteristik auswertet.

Zusätzlich zu den in Fig. 2 gezeigten drei Passivinfrarotsensoren können weitere zwei Passivinfrarotsensoren in der Sensoreinheit auf einer Achse bereitgestellt sein, die die Anordnungsachse der Sensoren 11A, 12A und 13A senkrecht in der Position des Sensors 12A schneidet, so dass die Positionen der fünf Sensoren die Form eines "+"-Zeichens in einer Ebene bilden. Mit dieser Sensoranordnung können in einer zu der Aufstellfläche 9 parallelen Ebene ausgeführte, gestenartige Bewegungen zweidimensional erfasst und ausgewertet werden.

Alternativ kann die Sensoreinheit 4 nur einen Passivinfrarotsensor mit einer geeignet ausgebildeten, vorgeschalteten Linsenstruktur umfassen.

Die Sensoreinheit 4 kann mit einem Bilderfassungssensor in Form einer Kamera versehen sein, und die Auswerte- und Steuereinrichtung 6 wertet den in dem Eingriffsbereich 5 gestenartig zurückgelegten Pfad mittels einer Bildverarbeitung der von der Sensoreinheit 4 erfassten Bilder oder Differenzen zwischen den Bildern aus.

Die Sensoreinheit 4 kann mit einem Hochfrequenzradarsensor versehen sein, der die Auswerte- und Steuereinrichtung 6 mit Informationen versorgt, so dass diese die Position der gestenartig im Eingriffsbereich 5 geführten Hand einer Bedienperson in Koordinatenform (beispielsweise Polarkoordinaten) ermitteln und zur Auswertung bezüglich des Vorliegens eines vorbestimmten Pfades nutzen kann. Für eine entsprechende Realisierung wird auf die technische Lehre verwiesen, die der europäischen Patentanmeldeveröffentlichung EP 2651 194 der Anmelderin entnommen werden kann und insbesondere im Hinblick auf eine konstruktiv-technische Realisierung der Sensorfunktionalität, eingeschlossen eine Feststellung von Abständen, Bewegungsrichtung und Bewegungsgeschwindigkeit eines Erfassungsobjekts berücksichtigt werden kann

## Patentansprüche

1. Gesteuerte Leuchtenvorrichtung (1) mit
einem Leuchtengehäuse (2) mit einer Lichtaustrittsöffnung (3),
einer Sensoreinheit (4) zum Erfassen eines Berührungslosen manuellen Eingriffs (15, 16-1, 16-2, 17) einer Bedienperson der Leuchtenvorrichtung in einem Eingriffsbereich (5, 5-1, 5-2), und
einer Auswerte- und Steuereinrichtung (6) zum Auswerten des von der Sensoreinheit erfassten Eingriffs der Bedienperson und zum Beeinflussen eines Steuerparameters für den Betrieb der Leuchtenvorrichtung in Abhängigkeit von einem Ergebnis des Auswertens, wobei
die Sensoreinheit (4) in und/oder an dem Leuchtengehäuse (2) seitlich benachbart zu der Lichtaustrittsöffnung (3) bereitgestellt ist,
die Auswerte- und Steuereinrichtung (6) so ausgebildet ist, dass sie den Steuerparameter beeinflusst, wenn das durch die Auswerte- und Steuereinrichtung (6) erfolgte Auswerten ergibt, dass bei dem Eingriff der Bedienperson ein vorbestimmter Pfad in dem Eingriffsbereich gestenartig zurückgelegt worden ist; und
der Steuerparameter für den Betrieb der Leuchtenvorrichtung mindestens einen Betriebszustand der Leuchtenvorrichtung beeinflusst, der ausgewählt ist aus der Gruppe von einer Leuchtmittelaktivierung, einer Lichtintensität des von der Leuchtenvorrichtung abgestrahlten Lichtes, einem Farbwert des von der Leuchtenvorrichtung abgestrahlten Lichtes und Kombinationen von diesen, **dadurch gekennzeichnet,**
**dass** die Auswerte- und Steuereinrichtung (6) so ausgebildet ist, dass sie den Steuerparameter dann beeinflusst, wenn das durch die Auswerte- und Steuereinrichtung erfolgte Auswerten ergibt, dass bei dem Eingriff der Bedienperson der vorbestimmte Pfad in dem Eingriffsbereich gestenartig mit einer vorbestimmten Geschwindigkeitscharakteristik zurückgelegt worden ist, und
**dass** der vorbestimmte Pfad einen räumlichen Teilbereich innerhalb des Eingriffsbereichs definiert, in dem der Eingriff der Bedienperson liegen muss, damit die Auswerte- und Steuereinrichtung den Steuerparameter beeinflusst.

2. Gesteuerte Lampenvorrichtung nach Anspruch 1, **dadurch gekennzeichnet, dass** die Auswerte- und Steuereinrichtung (6) ausgebildet ist zum Auswerten des Eingriffs der Bedienperson hinsichtlich einer vorbestimmten Mehrzahl vorbestimmter Pfade, zum Erkennen des zu dem Eingriff der Bedienperson zugehörigen vorbestimmten Pfades aus der vorbestimmten Mehrzahl vorbestimmter Pfade, und zum Beeinflussen des Steuerparameters in Abhängigkeit von dem erkannten vorbestimmten Pfad.

3. Gesteuerte Lampenvorrichtung nach einem der vorherigen Ansprüche, **dadurch gekennzeichnet, dass** die Auswerte- und Steuereinrichtung (6) so ausgebildet ist, dass sie den Steuerparameter dann beeinflusst, wenn das durch die Auswerte- und Steuereinrichtung erfolgte Auswerten ergibt, dass bei dem Eingriff der Bedienperson der vorbestimmte Pfad in dem Eingriffsbereich gestenartig innerhalb einer vorbestimmten Eingriffszeitdauer und/oder mit einer vorbestimmten Richtungscharakteristik zurückgelegt worden ist.

4. Gesteuerte Leuchtenvorrichtung nach einem der vorherigen Ansprüche, **dadurch gekennzeichnet, dass** die Auswerte- und Steuereinrichtung so ausgebildet ist, dass sie den Steuerparameter in Abhängigkeit von einer Richtung des bei dem Eingriff der Bedienperson zurückgelegten vorbestimmten Pfades relativ zu einer Referenzrichtung (9, 10) und/oder in, bevorzugt proportionaler, Abhängigkeit von einer Länge des bei dem Eingriff der Bedienperson zurückgelegten vorbestimmten Pfades beeinflusst.

5. Gesteuerte Leuchtenvorrichtung nach einem der vorherigen Ansprüche, **dadurch gekennzeichnet, dass** die Auswerte- und Steuereinrichtung (6) so ausgebildet ist, dass sie den Steuerparameter beeinflusst, während die Bedienperson den vorbestimmten Pfad gestenartig in dem Eingriffsbereich zurücklegt.

6. Gesteuerte Leuchtenvorrichtung nach einem der vorherigen Ansprüche, **dadurch gekennzeichnet, dass** die Auswerte- und Steuereinrichtung (6) eine Aktivierungseinheit enthält, die ausgebildet ist zum Erkennen, ob während des Eingriffs in dem Eingriffsbereich ein vorbestimmter Aktivierungspfad zurückgelegt worden ist, und die, für den Fall eines erkannten vorbestimmten Aktivierungspfades, der Auswerte- und Steuereinheit während eines Aktivierungsintervalls, zeitlich vorbestimmt oder durch einen sich dem erkannten Aktivierungspfad anschließenden Eingriff des Bedieners im Eingriffsbereich bestimmt, das Auswerten eines von der Sensoreinheit in dem Aktivierungsintervall erfassten berührungslosen manuellen Eingriffs in dem Eingriffsbereich und das Beeinflussen des Steuerparameters ermöglicht.

7. Gesteuerte Leuchtenvorrichtung nach einem der vorherigen Ansprüche, **dadurch gekennzeichnet, dass** die Auswerte- und Steuereinrichtung (6) ferner eine Speichereinrichtung umfasst zum Speichern eines aktuellen Steuerparameter für einen zukünftigen Betrieb der Leuchtenvorrichtung, insbesondere bei einem zukünftigen Einschaltvorgang, in Reaktion auf ein Speicherungssignal, und dass die Auswerte- und Steuereinrichtung ferner ausgebildet ist zum Erkennen eines Speicherungsbedarfs anhand davon, ob während des gestenartigen Eingriffs dieser für eine vorbestimmte Anhaltezeitdauer an einer Position im Eingriffsbereich angehalten wurde, und/oder ob in dem Eingriffsbereich ein vorbestimmter Speicherungspfad mit einer vorbestimmten Speicherungsgeschwindigkeitscharakteristik zurückgelegt worden ist, und zum Erzeugen des Speicherungssignals für den Fall eines erkannten Speicherungsbedarfs.

8. Gesteuerte Leuchtenvorrichtung nach einem der vorherigen Ansprüche, **dadurch gekennzeichnet, dass** die Auswerte- und Steuereinrichtung ferner eine Lern- und Konfigurationseinheit umfasst, die ausgebildet ist zum Erfassen und Aufzeichnen, in einem Trainingsbetriebsmodus, von Referenzpositionen und/oder von vorbestimmten Pfaden, die ein Bediener in dem Eingriffsbereich festlegt bzw. zurücklegt, und zum Konfigurieren der Auswerte- und Steuereinrichtung gemäß den erfassten und aufgezeichneten Referenzpositionen und/oder den vorbestimmten Pfaden,

9. Gesteuerte Lampenvorrichtung nach einem der vorherigen Ansprüche, **dadurch gekennzeichnet, dass** die Sensoreinheit (4) einen Sensor (11A, 11B, 11C) von einem Typ aus einer Gruppe von einem Passivinfrarotsensor, Bilderfassungssensor und Hochfrequenzradarsensor oder eine eindimensional oder zweidimensional angeordnete Kombination von Sensoren von einem gleichen Typ oder unterschiedlichen Typen aus der Gruppe umfasst, um den berührungslosen manuellen Eingriff der Bedienperson in dem Eingriffsbereich zu erfassen.

10. Gesteuerte Leuchtenvorrichtung nach einem der vorherigen Ansprüche, **dadurch gekennzeichnet, dass** das Leuchtengehäuse (2) der, bevorzugt als Tischleuchte (1) ausgebildeten, Leuchtenvorrichtung (1) bodenseitig und von der Lichtaustrittsöffnung (3) beabstandet einen Sockel (8) zum Aufstellen der Leuchtenvorrichtung auf einer Aufstellfläche (9) aufweist, und dass der Eingriffsbereich (5, 5-1, 5-2) sich von einer Fläche der Lichtaustrittsöffnung (3) bis zu der Aufstellfläche (9) erstreckt und bevorzugt mit einem von der Lichtaustrittsöffnung mit Licht bestrahlbaren Beleuchtungsbereich (7, 7-1, 7-2) überlappt und/oder in diesem gelegen ist.

## Claims

1. A controlled lamp device (1) comprising
a lamp housing (2) with a light exit opening (3),
a sensor unit (4) for detecting a contactless manual intervention (15, 16-1, 16-2, 17) of an operator of the lamp device in an intervention region (5, 5-1, 5-2), and
an evaluation and control device (6) for evaluating the intervention of the operator detected by the sensor unit and for influencing a control parameter for the operation of the lamp device depending on a result of the evaluation, wherein
the sensor unit (4) is provided in and/or on the lamp housing (2) laterally adjacent to the light exit opening (3),
the evaluation and control device (6) is designed such that it influences the control parameter if the evaluation carried out by the evaluation and control device (6) shows that a predefined path in an intervention region has been covered in a gesture-like manner during the intervention of the operator;
and
the control parameter for the operation of the lamp device influences at least one operating state of the lamp device, which is selected from the group of a lamp activation, a light intensity of the light emitted by the lamp device, a color value of the light emitted by the lamp device, and combinations of these,
**characterized in**
**that** the evaluation and control device (6) is designed such that it influences the control parameter if the evaluation carried out by the evaluation and control device (6) shows that during the intervention of the operator the predefined path in the intervention region has been covered in a gesture-like manner with a predefined velocity characteristic, and
**that** the predefined path defines a spatial sub-region within the intervention region, in which the gesture executed by the operator must be located, in order for the evaluation and control device to influence the control parameter.

2. The controlled lamp device according to claim 1, **characterized in that** the evaluation and control device (6) is designed to evaluate the intervention of the operator with respect to a predefined plurality of predefined paths, to identify the predefined path associated with the intervention of the operator from the predefined plurality of predefined paths, and to influence the control parameter depending on the predefined path detected.

3. The controlled lamp device according to any one of the previous claims, **characterized in that** the evaluation and control device (6) is designed in such a way that it influences the control parameter when the evaluation carried out by the evaluation and control device shows that during the intervention of the operator, the predefined path in the intervention region has been covered in a gesture-like manner within a predefined intervention duration and/or with a predefined direction characteristic.

4. The controlled lamp device according to any one of the previous claims, **characterized in that** the evaluation and control device is designed such that it influences the control parameter depending on a direction of the predefined path covered during the intervention of the operator relative to a reference direction (9, 10) and/or, preferably proportionally, as a function of a length of the predefined path covered during the intervention of the operator.

5. The controlled lamp device according to any one of the previous claims, **characterized in that** the evaluation and control device (6) is designed such that it influences the control parameter while the operator is covering the predefined path in the intervention region in a gesture-like manner.

6. The controlled lamp device according to any one of the previous claims, **characterized in that** the evaluation and control device (6) contains an activation unit, which is designed to detect whether a predefined activation path has been covered during the intervention in the intervention region, and which in the event that a predefined activation path has been detected, enables the evaluation and control unit, during an activation interval which is temporally predefined or defined by an intervention of the operator immediately following the activation path in the intervention region, to evaluate a contactless manual intervention in the intervention region detected by the sensor unit in the activation interval and to influence the control parameter.

7. The controlled lamp device according to any one of the previous claims, **characterized in that** the evaluation and control device (6) further includes a storage device for storing a current control parameter for a future operation of the lamp device, in particular in the event of a future switching-on operation, in response to a stored signal, and that the evaluation and control device is also designed to detect a storage requirement on the basis of whether, during the gesture-like intervention this was stopped for a predefined dwell time at a position in the intervention region, and/or whether a predefined storage path in the intervention region has been covered with a predefined storage speed characteristic, and to generate the storage signal in the event of a storage requirement being detected.

8. The controlled lamp device according to any one of the previous claims, **characterized in that** the evaluation and control device additionally contains a learning and configuration unit, which is designed for the detection and recording, in a training operating mode, of reference positions and/or of predefined paths which an operator defines or covers in the intervention region, and for configuring the evaluation and control device in accordance with the reference positions detected and recorded and/or with the predefined paths.

9. The controlled lamp device according to any one of the previous claims, **characterized in that** the sensor unit (4) comprises a sensor (11A, 11B, 11C) of a type from a group of a passive infrared sensor, image acquisition sensor and highfrequency radar sensor or a combination of sensors of the same type or different types from the group arranged in one or two dimensions, in order to detect the contactless manual intervention of the operator in the intervention region.

10. The controlled lamp device according to any one of the previous claims, **characterized in that** the light housing (2) of the lamp device (1), which is preferably designed as a table lamp (1), comprises on its base and spaced apart from the light exit opening (3), a stand (8) for mounting the lamp device on a mounting surface (9), and that the intervention region (5, 5-1, 5-2) extends from a surface of the light exit opening (3) as far as the mounting surface (9) and preferably overlaps with an illumination region (7, 7-1, 7-2) that can be irradiated with light from the light exit opening, and/or is located therein.

## Revendications

1. Dispositif de luminaire commandé (1) avec
un boîtier de luminaire (2) avec une ouverture de sortie de lumière (3),
une unité à capteur (4) pour détecter une intervention manuelle sans contact (15, 16-1, 16-2, 17) d'un utilisateur du dispositif de luminaire dans une zone d'intervention (5, 5-1, 5-2), et
un dispositif d'analyse et de commande (6) pour analyser l'intervention de l'utilisateur détectée par l'unité à capteur et pour influer sur un paramètre de commande pour le fonctionnement du dispositif de luminaire en fonction d'un résultat de l'analyse, dans lequel
l'unité à capteur (4) est prévue dans et/ou sur le boîtier de luminaire (2) latéralement près de l'ouverture de sortie de lumière (3),
le dispositif d'analyse et de commande (6) est formé de telle sorte qu'il influe sur le paramètre de commande si l'analyse effectuée par le dispositif d'analyse et de commande (6) a pour résultat que lors de l'intervention de l'utilisateur une trajectoire prédéfinie a été parcourue à la manière d'un geste dans la zone d'intervention ;
et le paramètre de commande pour le fonctionnement du dispositif de luminaire influe sur au moins un état de fonctionnement du dispositif de luminaire qui est sélectionné dans le groupe d'une activation de moyen de luminaire, d'une intensité lumineuse de la lumière émise par le dispositif de luminaire, d'une valeur de couleur de la lumière émise par le dispositif de luminaire et de combinaisons de celles-ci,
**caractérisé en ce que**
le dispositif d'analyse et de commande (6) est formé de telle sorte qu'il influe sur le paramètre de commande lorsque l'analyse réalisée par le dispositif d'analyse et de commande (6) a pour résultat que lors de l'intervention de l'utilisateur la trajectoire prédéfinie a été parcourue à la manière d'un geste dans la zone d'intervention avec une caractéristique de vitesse prédéfinie, et
**en ce que** la trajectoire prédéfinie définit une zone partielle spatiale à l'intérieur de la zone d'intervention dans laquelle l'intervention de l'utilisateur doit être située pour que le dispositif d'analyse et de commande (6) influe sur le paramètre de commande.

2. Dispositif de lampe commandé selon la revendication 1, **caractérisé en ce que** le dispositif d'analyse et de commande (6) est formé pour analyser l'intervention de l'utilisateur relativement à une multiplicité prédéfinie de trajectoires prédéfinies, pour reconnaître la trajectoire prédéfinie associée à l'intervention de l'utilisateur parmi la multiplicité prédéfinie de trajectoires prédéfinies, et pour influer sur le paramètre de commande en fonction de la trajectoire prédéfinie reconnue.

3. Dispositif de lampe commandé selon l'une des revendications précédentes, **caractérisé en ce que** le dispositif d'analyse et de commande (6) est formé de telle sorte qu'il influe sur le paramètre de commande lorsque l'analyse réalisée par le dispositif d'analyse et de commande a pour résultat que lors de l'intervention de l'utilisateur la trajectoire prédéfinie a été parcourue à la manière d'un geste dans la zone d'intervention à l'intérieur d'une durée d'intervention prédéfinie et/ou avec une caractéristique de direction prédéfinie.

4. Dispositif de luminaire commandé selon l'une des revendications précédentes, **caractérisé en ce que** le dispositif d'analyse et de commande est formé de telle sorte qu'il influe sur le paramètre de commande en fonction d'une direction de la trajectoire prédéfinie parcourue lors de l'intervention de l'utilisateur, par rapport à une direction de référence (9,10) et/ou en fonction, de préférence proportionnelle, d'une longueur de la trajectoire prédéfinie parcourue lors de l'intervention de l'utilisateur.

5. Dispositif de luminaire commandé selon l'une des revendications précédentes, **caractérisé en ce que** le dispositif d'analyse et de commande (6) est formé de telle sorte qu'il influe sur le paramètre de commande pendant que l'utilisateur parcourt la trajectoire prédéfinie à la manière d'un geste dans la zone d'intervention.

6. Dispositif de luminaire commandé selon l'une des revendications précédentes, **caractérisé en ce que** le dispositif d'analyse et de commande (6) contient une unité d'activation qui est formée pour reconnaître si pendant l'intervention dans la zone d'intervention une trajectoire d'activation prédéfinie a été parcourue, et qui, pour le cas d'une trajectoire d'activation prédéfinie reconnue, permet à l'unité d'analyse et de commande pendant un intervalle d'activation, prédéfini temporellement ou défini par une intervention de l'utilisateur faisant suite à la trajectoire d'activation reconnue, dans la zone d'intervention, d'analyser une intervention manuelle sans contact, dans la zone d'intervention, détectée par l'unité à capteur dans l'intervalle d'activation, et d'influer sur le paramètre de commande.

7. Dispositif de luminaire commandé selon l'une des revendications précédentes, **caractérisé en ce que** le dispositif d'analyse et de commande (6) comprend en outre un dispositif de stockage pour stocker un paramètre de commande actuel pour un fonctionnement futur du dispositif de luminaire, en particulier lors d'une opération de mise en marche future, en réaction à un signal de stockage, et **en ce que** le dispositif d'analyse et de commande est formé en outre pour reconnaître un besoin de stockage à l'aide du fait que pendant l'intervention à la manière d'un geste celle-ci a été arrêtée à une position dans la zone d'intervention pour une durée d'arrêt prédéfinie, et/ou que dans la zone d'intervention une trajectoire de stockage prédéfinie avec une caractéristique de vitesse de stockage prédéfinie a été parcourue, et pour générer le signal de stockage pour le cas d'un besoin de stockage reconnu.

8. Dispositif de luminaire commandé selon l'une des revendications précédentes, **caractérisé en ce que** le dispositif d'analyse et de commande comprend en outre une unité d'apprentissage et de configuration qui est formée pour détecter et enregistrer, dans un mode de fonctionnement d'entraînement, des positions de référence et/ou des trajectoires prédéfinies qu'un utilisateur fixe ou parcourt dans la zone d'intervention, et pour configurer le dispositif d'analyse et de commande selon les positions de référence détectées et enregistrées et/ou les trajectoires prédéfinies.

9. Dispositif de lampe commandé selon l'une des revendications précédentes, **caractérisé en ce que** l'unité à capteur (4) comprend un capteur (11A, 11B, 11C) d'un type parmi un groupe d'un capteur passif à infrarouge, un capteur à détection d'images et un capteur radar haute fréquence ou une combinaison disposée en une dimension ou deux dimensions de capteurs du groupe, d'un même type ou de types différents, pour détecter l'intervention manuelle sans contact de l'utilisateur dans la zone d'intervention.

10. Dispositif de luminaire commandé selon l'une des revendications précédentes, **caractérisé en ce que** le boîtier de luminaire (2) du dispositif de luminaire (1), formé de préférence comme un luminaire de bureau (1), comporte côté base et à une distance de l'ouverture de sortie de lumière (3) un socle (8) pour installer le dispositif de luminaire sur une surface d'installation (9), et **en ce que** la zone d'intervention (5, 5-1, 5-2) s'étend d'une surface de l'ouverture de sortie de lumière (3) jusqu'à la surface d'installation (9) et de préférence recouvre une zone d'éclairage (7, 7-1, 7-2) apte à être exposée à la lumière depuis l'ouverture de sortie de lumière et/ou est située dans cette zone d'éclairage (7, 7-1, 7-2).
